# EUROPEAN PATENT SPECIFICATION

(11) **EP 3 046 111 B1**
(45) Date of publication and mention of the grant of the patent: **29.08.2018**
(21) Application number: 15202601.9
(22) Date of filing: 23.12.2015
(51) Int. Cl.: G21C 7/32, G21D 3/14, G21D 3/16

(54) **NUCLEAR REACTOR POWER REGULATOR AND METHOD**
KERNREAKTORLEISTUNGSREGLER UND VERFAHREN
PROCÉDÉ ET RÉGULATION DE PUISSANCE DE RÉACTEUR NUCLÉAIRE

(30) Priority: 19.01.2015 JP 2015007973
(43) Date of publication of application: 20.07.2016
(73) Proprietor: Kabushiki Kaisha Toshiba, Tokyo 105-8001 (JP)
(72) Inventor: TAKADO, Naoyuki, Minato-ku, Tokyo 108-8001 (JP)
(74) Representative: Moreland, David

(56) References cited:
- US-A- 4 150 546

## Description

### FIELD

Embodiments described herein relate to a nuclear reactor power regulator and method for adjusting an output power of a nuclear reactor.

### BACKGROUND

A nuclear power plant includes a nuclear reactor; and a turbine and a power generator, which converts thermal energy of steam generated by the reactor into electric energy. In such a nuclear power plant, in order to suppress fluctuations in the frequency of an electric power system, a nuclear reactor power regulator, which adjusts the output power of the reactor, has been developed.

US 4, 150, 546 discloses a method and apparatus for providing a single-cycle boiling moderator-coolant nuclear reactor which accommodates changes in demand with a turbine generator on direct governor control.

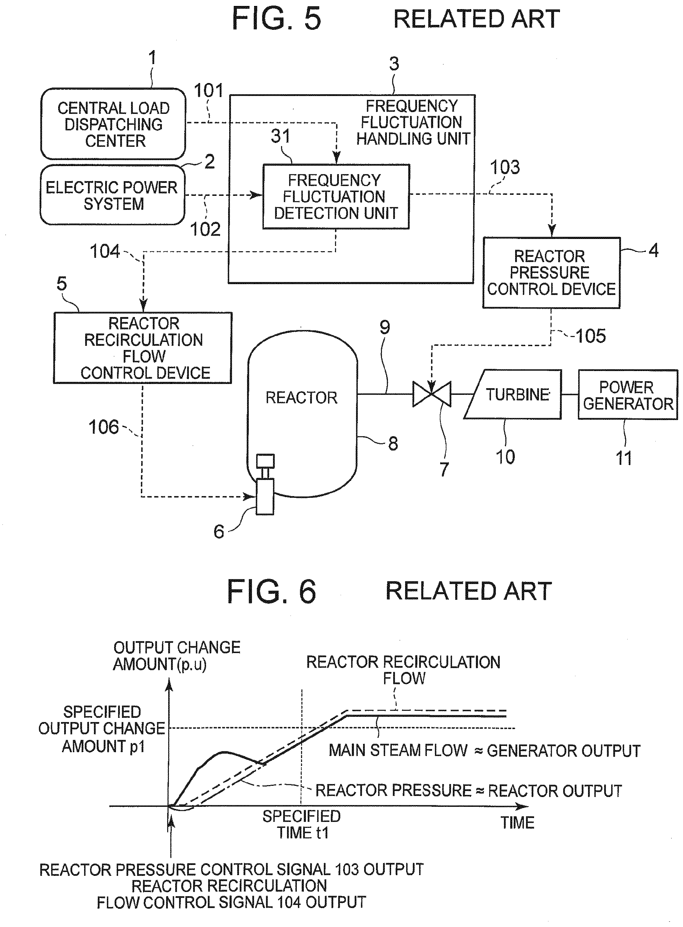

FIG. 5 is a system diagram showing the configuration of a conventional nuclear reactor power regulator.

As shown in FIG. 5, a central load dispatching center 1 outputs an output power change command signal 101. The output power change command signal 101 is input to a frequency fluctuation detection unit 31, which is placed in a frequency fluctuation handling unit 3. The frequency fluctuation detection unit 31 outputs, based on the input output power change command signal 101, at least one of a reactor pressure control signal 103 and a reactor recirculation flow control signal 104.

Incidentally, instead of the output power change command signal 101, an electric power system frequency signal 102 of an electric power system 2 may be input to the frequency fluctuation detection unit 31. In such a case, the frequency fluctuation detection unit 31 detects frequency fluctuations, thereby allowing at least one of the reactor pressure control signal 103 and the reactor recirculation flow control signal 104 to be output.

A reactor pressure control device 4 receives, as an input, the reactor pressure control signal 103, and outputs a turbine regulator valve control signal 105 to a turbine regulator valve 7 in order to control the degree of opening of the turbine regulator valve 7. In this manner, the flow of main steam flowing into a turbine 10 from a main steam pipe 9 is controlled. In proportion to the flow of main steam flowing into the turbine 10, a power generator 11 outputs electric power.

A reactor recirculation flow control device 5 receives, as an input, the reactor recirculation flow control signal 104, and outputs a reactor recirculation pump control signal 106 to a reactor recirculation pump 6 in order to control a reactor recirculation flow of the reactor recirculation pump 6. In this manner, the output power of the reactor is controlled. As a result, the flow of main steam flowing into the turbine 10 from the main steam pipe 9 is controlled. In proportion to the flow of main steam flowing into the turbine 10, the power generator 11 outputs electric power.

In that manner, as with conventional techniques like the one disclosed in Japanese Patent Publication No. 04-41800, in accordance with the output power change command signal 101, the degree of opening of the turbine regulator valve 7 has been controlled; or, depending on a fluctuating range of the electric power system frequency signal 102, the reactor recirculation flow of the reactor recirculation pump 6 has been increased or decreased. In this manner, a call for changing a small amount (up to several percent) of the output power of the power generator in a short time (up to several seconds) has been satisfied. This means that the conventional nuclear reactor power regulator had been developed to meet a call for changing a small amount of the output power of the power generator in a short time.

However, it is difficult for the nuclear reactor power regulator's functions that have so far been developed to meet a call for changing a medium amount of load at high speed (such as changing some 10% of the power generator's output power (load) in about 10 seconds) in order to suppress frequency fluctuations of the electric power system associated with a recent widespread introduction of renewable energy, because of the following problems:

Firstly, as the turbine regulator valve 7 is opened or closed in order to change the output power of the power generator, the pressure and output power of the reactor change in a direction opposite to the increase or decrease direction of the output power of the power generator (When the turbine regulator valve 7 is opened in order to increase the output power of the power generator 11, the pressure and output power of the reactor will decrease due to an increase in the flow of main steam. When the turbine regulator valve 7 is closed, the pressure and output power of the reactor will increase).

Accordingly, if specified output power change amount p1 cannot be satisfied due to a temporal change in the flow of main steam within specified time t1 as shown in FIG. 6, or if there is a call for changing a medium amount of load at high speed, the call cannot be satisfied. That is, at the time of the medium-amount high-speed load change, the specified output power change amount p1 cannot be achieved during the specified time t1, which is an electric power system request.

Secondly, in order to avoid fluctuations in the output power of the reactor associated with the opening or closing of the turbine regulator valve 7, only the reactor recirculation flow may be changed. In such a case, from when the reactor recirculation flow is changed till when the output power of the reactor changes, there is a time delay: the neutron flux changes after the amount of void inside the reactor is changed, and then the output power (amount of heat) of the reactor is changed. Or the rate of change of the reactor's output power associated with fluctuations in the reactor recirculation flow is low. Therefore, it is impossible to achieve a load change rate as requested. Thus, the call cannot be satisfied.

Incidentally, even if the opening or closing of the turbine regulator valve 7 is combined with the changing of the reactor recirculation flow, the specified output change amount p1 cannot be achieved during the specified time t1, which is an electric power system request, for the above-stated reasons as shown in FIG. 6.

Among the possible measures to meet the above call are increasing the rate of change of the recirculation flow or making the main steam pipe bigger. However, under present circumstances, the possibility of taking such measures is low in terms of cost and plant stability.

The object to be achieved by embodiments of the present invention is to provide a nuclear reactor power regulator and method that can easily achieve a specified output power change amount within a specified time, which is an electric power system request, at a time when the load is changed.

### BRIEF DESCRIPTION OF THE DRAWINGS

The features and advantages of the present invention will become apparent from the discussion hereinbelow of specific, illustrative embodiments thereof presented in conjunction with the accompanying drawings, in which:
FIG. 1 is a system diagram showing the configuration of a nuclear reactor power regulator according to a first embodiment;
FIG. 2 is a flowchart showing operation of a control unit of the first embodiment;
FIG. 3 is a timing chart showing plant parameters when the first embodiment is used;
FIG. 4 is a system diagram showing the configuration of a nuclear reactor power regulator according to a second embodiment;
FIG. 5 is a system diagram showing the configuration of a conventional nuclear reactor power regulator; and
FIG. 6 is a timing chart showing plant parameters when the conventional nuclear reactor power regulator is used.

### DETAILED DESCRIPTION

According to one embodiment, there is provided a nuclear reactor power regulator comprising: a frequency fluctuation detection unit that detects a frequency fluctuation of at least one of an output power change command signal output from a central load dispatching center and an electric power system frequency signal output from an electric power system; a control unit that conducts control in such a way as to receive, as an input, a frequency fluctuation detection signal of the frequency fluctuation detection unit, and output a reactor pressure adjustment command signal, which is for adjusting a reactor pressure, and a reactor recirculation flow adjustment command signal, which is for adjusting a reactor recirculation flow; a reactor pressure adjustment unit that receives, as an input, the reactor pressure adjustment command signal, and adjusts a reactor pressure adjustment start time and a pressure fluctuating range showing a range in which the pressure is allowed to change to a target pressure value; and a reactor recirculation flow adjustment unit that receives, as an input, the reactor recirculation flow adjustment command signal, and adjusts a reactor recirculation flow adjustment start time and a flow fluctuating range showing a range in which the flow is allowed to change to a target flow value, wherein the control unit outputs the reactor pressure adjustment command signal at a predetermined time after outputting the reactor recirculation flow adjustment command signal, the predetermined time being predetermined based on request from the electric power system. Further, according to another embodiment, there is provided a reactor power adjustment method comprising: a frequency fluctuation detection step of detecting a frequency fluctuation of at least one of an output power change command signal output from a central load dispatching center and an electric power system frequency signal output from an electric power system; a control step of conducting control in such a way as to receive, as an input, a frequency fluctuation detection signal obtained by the frequency fluctuation detection step, and output a reactor pressure adjustment command signal, which is for adjusting a reactor pressure, and a reactor recirculation flow adjustment command signal, which is for adjusting a reactor recirculation flow; a reactor pressure adjustment step of receiving, as an input, the reactor pressure adjustment command signal, and adjusting a reactor pressure adjustment start time and a pressure fluctuating range showing a range in which the pressure is allowed to change to a target pressure value; and a reactor recirculation flow adjustment step of receiving, as an input, the reactor recirculation flow adjustment command signal, and adjusting a reactor recirculation flow adjustment start time and a flow fluctuating range showing a range in which the flow is allowed to change to a target flow value, wherein the control step outputs the reactor pressure adjustment command signal at a predetermined time after outputting the reactor recirculation flow adjustment command signal, the predetermined time being predetermined based on request from the electric power system. Hereinafter, a nuclear reactor power regulator and method of the present embodiment will be described with reference to the accompanying drawings.

### (FIRST EMBODIMENT)

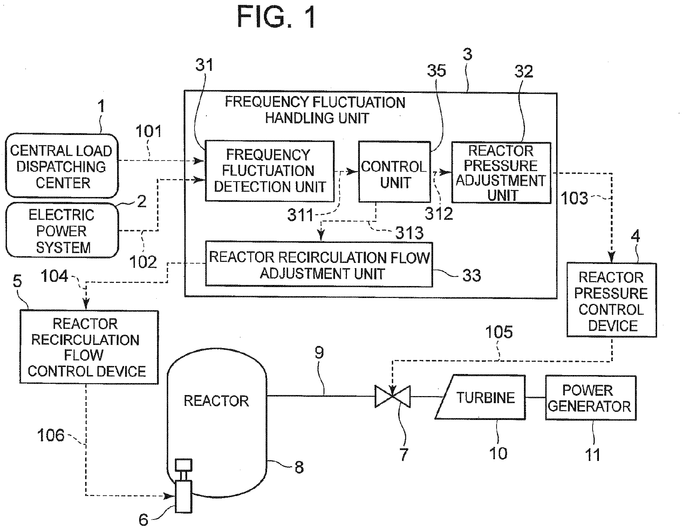

FIG. 1 is a system diagram showing the configuration of a nuclear reactor power regulator according to a first embodiment. Incidentally, the portions that are the same as or similar to those of the conventional configuration are represented by the same reference symbols. In the embodiment described below, as a nuclear reactor, a boiling-water reactor is applied as an example.

As shown in FIG. 1, a frequency fluctuation handling unit 3 of the present embodiment includes a frequency fluctuation detection unit 31, a control unit 35, a reactor pressure adjustment unit 32, and a reactor recirculation flow adjustment unit 33.

The frequency fluctuation detection unit 31 receives, as an input, an output power change command signal 101 that is output from a central load dispatching center 1 or an electric power system frequency signal 102 that is output from an electric power system 2, before detecting frequency fluctuations. Among the factors that cause the frequency of the electric power system 2 to fluctuate are a trip following a malfunction of a power generator, a start-up of a plurality of large auxiliary machines, and system disturbance such as ground fault, for example.

The central load dispatching center 1 has a function of controlling the amount of power generated at each power plant in such a way as to match the amount of power being used. The electric power system 2 refers to a system that integrates electric power generation, electric power transformation, electric power transmission, and electric power distribution in order to supply electric power. In order to supply power in a stable manner, requests (grid codes) for each power plant have been defined.

The control unit 35 is made up of computer resources such as personal computer. The control unit 35 reads operation programs and various kinds of data recorded on recording media, such as hard disk devices (not shown), and loads them into main memory; CPU sequentially executes the loaded operation programs. The control unit 35 receives, as an input, a frequency fluctuation detection signal 311. Based on the frequency fluctuation detection signal 311, the control unit 35 calculates a reactor pressure, which is output as a reactor pressure adjustment command signal 312, and the control unit 35 also calculates a reactor recirculation flow, which is output as a reactor recirculation flow adjustment command signal 313.

To the control unit 35, from the frequency fluctuation detection unit 31, the frequency fluctuation detection signal 311 is input. The control unit 35 outputs, to the reactor pressure adjustment unit 32, the reactor pressure adjustment command signal 312 in order to adjust the reactor pressure. The control unit 35 also outputs, to the reactor recirculation flow adjustment unit 33, the reactor recirculation flow adjustment command signal 313 in order to adjust the reactor recirculation flow.

The control unit 35 controls the order that the signals are output: the reactor recirculation flow adjustment command signal 313 output comes before the reactor pressure adjustment command signal 312 output, or the reactor pressure adjustment command signal 312 output comes before the reactor recirculation flow adjustment command signal 313 output. According to the present embodiment, as described later, the reactor recirculation flow adjustment command signal 313 is output before the reactor pressure adjustment command signal 312 is output.

To the reactor pressure adjustment unit 32, the reactor pressure adjustment command signal 312 is input. The reactor pressure adjustment unit 32 outputs, to a reactor pressure control device 4, a reactor pressure control signal 103. More specifically, based on the reactor pressure adjustment command signal 312, the reactor pressure adjustment unit 32 adjusts a reactor pressure adjustment start time, a pressure fluctuating range, and a pressure change rate. The pressure fluctuating range represents a range where the pressure is allowed to fluctuate from a certain pressure value to a target pressure value. The pressure change rate is a per unit time pressure variation value.

The reactor pressure adjustment unit 32 outputs, after a calculated reactor pressure adjustment start time has passed, the reactor pressure control signal 103 to the reactor pressure control device 4; the reactor pressure control signal 103 shows the reactor pressure or the fluctuating range and change rate of the flow of main steam.

To the reactor recirculation flow adjustment unit 33, the reactor recirculation flow adjustment command signal 313 is input. The reactor recirculation flow adjustment unit 33 outputs, to a reactor recirculation flow control device 5, a reactor recirculation flow control signal 104. More specifically, based on the reactor recirculation flow adjustment command signal 313, the reactor recirculation flow adjustment unit 33 adjusts a reactor recirculation flow adjustment start time, a flow fluctuating range, and a flow change rate. The flow fluctuating range represents a range where the flow is allowed to fluctuate from a certain level to a target level. The flow change rate is a per unit time flow variation value.

The reactor recirculation flow adjustment unit 33 outputs, after a calculated reactor recirculation flow adjustment start time has passed, the reactor recirculation flow control signal 104 to the reactor recirculation flow control device 5; the reactor recirculation flow control signal 104 shows the fluctuating range and change rate of the reactor recirculation flow.

The reactor pressure control device 4 outputs a turbine regulator valve control signal 105 to a turbine regulator valve 7 to control the degree of opening of the turbine regulator valve 7, thereby controlling the flow of main steam flowing into a turbine 10 from a main steam pipe 9. In proportion to the flow of main steam flowing into the turbine 10, a power generator 11 outputs electric power.

The reactor recirculation flow control device 5 outputs a reactor recirculation pump control signal 106 to a reactor recirculation pump 6 in order to control a reactor recirculation flow of the reactor recirculation pump 6. In this manner, the output power of the reactor is controlled. As a result, the flow of main steam flowing into the turbine 10 from the main steam pipe 9 is controlled. In proportion to the flow of main steam flowing into the turbine 10, the power generator 11 outputs electric power.

The operation of the present embodiment will be described.

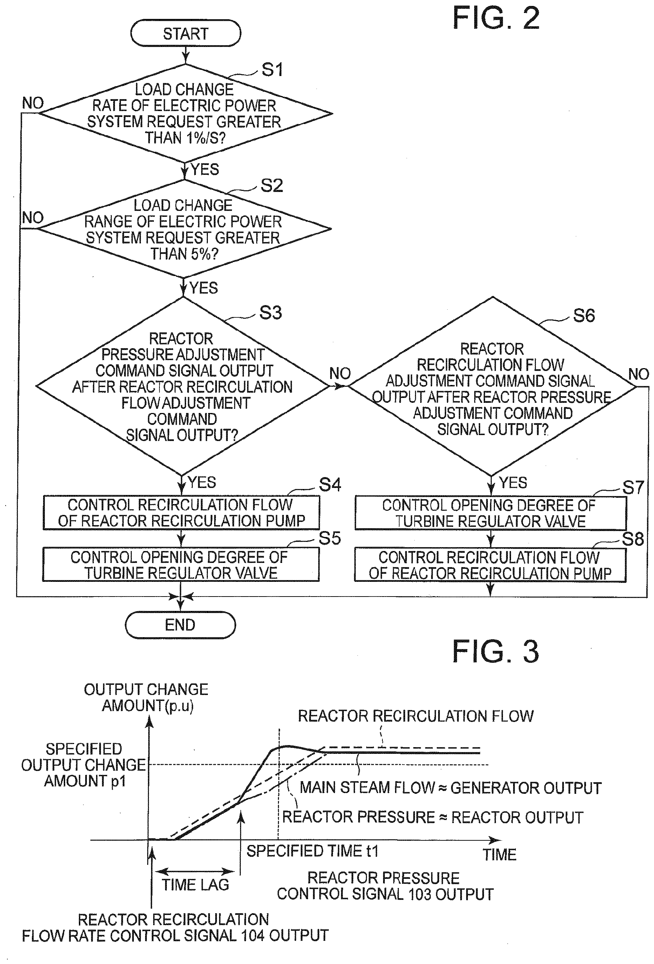

FIG. 2 is a flowchart showing the operation of the control unit 35 of the first embodiment. FIG. 3 is a timing chart showing plant parameters when the first embodiment is used.

As shown in FIG. 2, first, a determination is made as to whether or not a load change rate of an electric power system request is greater than 1%/s (Step S1). If the rate is greater than 1%/s (Step S1: Yes), a determination is made at step S2 as to whether or not a load change range of an electric power system request is greater than 5% (Step S2) . If the range is greater than 5% (Step S2: Yes), the process proceeds to step S3.

If a request is made by the electric power system with a speed of less than 1%/s and a load change range of less than 5% (Steps S1, S2: No), even the above-described conventional technique is able to meet the request. Therefore, the process comes to an end.

At step S3, a determination is made as to whether the reactor pressure adjustment command signal 312 is output at a predetermined time after the reactor recirculation flow adjustment command signal 313 is output. If the signals are to be output in that order (Step S3: Yes), the reactor recirculation flow of the reactor recirculation pump 6 is controlled, and then the degree of opening of the turbine regulator valve 7 is controlled (Steps S4, S5). In this case, the predetermined time is determined based on what is requested by the electric power system side; the predetermined time may be the time from when the reactor recirculation flow is changed till when the output power of the reactor changes, or the time during which the neutron flux changes after the amount of void inside the reactor is changed and then the output power (amount of heat) of the reactor is changed.

If the reactor pressure adjustment command signal 312 is not output after the reactor recirculation flow adjustment command signal 313 is output at step S3, the process proceeds to step S6. At step S6, a determination is made as to whether the reactor recirculation flow adjustment command signal 313 is output at a predetermined time after the reactor pressure adjustment command signal 312 is output. If the signals are to be output in that order (Step S6: Yes), the degree of opening of the turbine regulator valve 7 is controlled, and then the reactor recirculation flow of the reactor recirculation pump 6 is controlled (Steps S7, S8). In any cases other than those described above (Step S6: No), the entire process comes to an end. In this case, the predetermined time is determined based on such things as the type of the reactor; the predetermined time may be the time from when the degree of opening of the turbine regulator valve 7 is controlled till when the output power of the reactor changes, or the time during which the neutron flux changes after the amount of void inside the reactor is changed and then the output power (amount of heat rate) of the reactor is changed.

Incidentally, according to the present embodiment, steps S3 to S5 are mainly performed. More specifically, the reactor recirculation flow adjustment command signal 313 is output, and then the reactor pressure adjustment command signal 312 is output. In some cases, as in the processes of steps S6 to S8, the reactor pressure adjustment command signal 312 is output, and then the reactor recirculation flow adjustment command signal 313 is output. Whether or not steps S6 to S8 are carried out is determined based on the type of the reactor 8 and the like.

Therefore, according to the present embodiment, the reactor pressure adjustment command signal 312 is output a predetermined time after the reactor recirculation flow adjustment command signal 313 is output.

In that manner, for example, if a request is made by the electric power system with a speed of more than 1%/s and a load change range of more than 5%, the request can be fulfilled by the present embodiment.

Incidentally, what has been described in the present embodiment is the case where the request is made by the electric power system with a speed of more than 1%/s and a load change range of more than 5%. The present embodiment can also be applied even when a request is made with any other speed and any other load change range.

According to the present embodiment, as shown in FIG. 3, the reactor pressure control signal 103 is output with an appropriate, predetermined delay of time (time lag) after the output time of the reactor recirculation flow control signal 104; the time delay is calculated by the reactor pressure adjustment unit 32. Therefore, a time lag between a change in the reactor recirculation flow and a change in the reactor output power and main-steam flow can be compensated for by a change in the flow of main steam caused by the opening or closing of the turbine regulator valve 7.

Moreover, a change in the reactor output caused by the opening or closing of the turbine regulator valve 7 can be compensated for by a change in the reactor recirculation flow. Therefore, a specified change amount can be easily achieved within a specified time, which is an electric power system request.

As described above, according to the present embodiment, without being affected by a change in the nuclear output reactor power caused by the opening or closing of the turbine regulator valve 7, at the time of the medium-amount high-speed load change (such as changing some 10% of the load in about 10 seconds), a specified change amount can be easily achieved within a specified time, which is an electric power system request.

Incidentally, according to the present embodiment, the reactor pressure or main-steam flow, the fluctuating range and change rate of the reactor recirculation flow, and the control start time are determined in advance in such a way as to meet specifications required from the reactor side, such as electric power system's required specifications and thermal output limit value, based on results of plant analysis and actual plant tests.

### (SECOND EMBODIMENT)

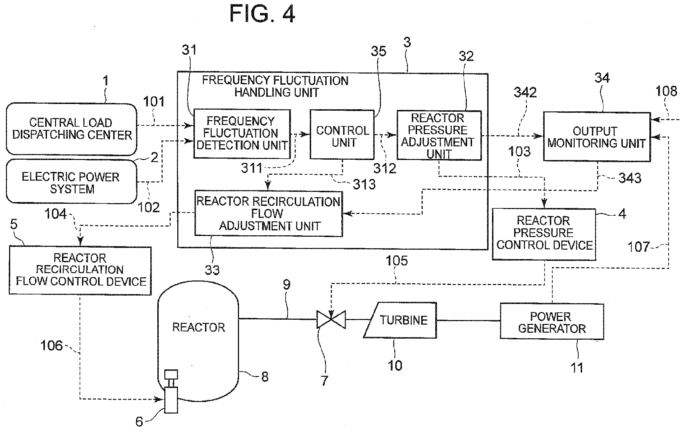

FIG. 4 is a system diagram showing the configuration of a nuclear reactor power regulator according to a second embodiment. Incidentally, the present embodiment is a variant of the above-described first embodiment. The portions that are the same as or similar to those of the first embodiment are represented by the same reference symbols, and will not be described again.

The present embodiment is different from the first embodiment in that an output monitoring unit 34 is added. To the output monitoring unit 34, a generator output signal 107 and a reactor output signal 108 are input. The output monitoring unit 34 outputs a reactor pressure adjustment correction signal 342, which corrects a reactor pressure adjustment start time, a pressure fluctuating range, and a pressure change rate; and a reactor recirculation flow adjustment correction signal 343, which corrects a reactor recirculation flow adjustment start time, a flow fluctuating range, and a flow change rate.

In this case, as the reactor output signal 108, for example, signals obtained from a power range monitor, such as local power range monitor (LPRM) or average power range monitor (APRM), are used.

In that manner, according to the present embodiment, the output monitoring unit 34 is provided. Therefore, in accordance with the output power of the power generator or nuclear reactor at a time when a high-speed load change has started, it is possible to appropriately set a reactor pressure adjustment start time, a pressure fluctuation range and a pressure change rate, and a reactor recirculation flow adjustment start time, a flow fluctuation range and a flow change rate. Thus, at the time of a large-scale frequency change, it is possible to meet demand from the electric power system side that the output power of the power generator is changed as much as possible.

Incidentally, according to the present embodiment, the following parameters are determined in advance in such a way as to satisfy specifications required from the nuclear reactor side, such as electric power system's required specifications and thermal output power limit value, based on results of plant analysis and actual plant tests: a reactor pressure adjustment start time that depends on the output power of each power generator or reactor; a pressure fluctuating range and a pressure change rate; a reactor recirculation flow adjustment start time; a flow fluctuating range; and a flow change rate.

Moreover, according to the present embodiment, the output monitoring unit 34 is added to the first embodiment. Therefore, the fluctuating range of the output power of the power generator at the time of a high-speed load change can be monitored. As a result, the fluctuating ranges of the reactor pressure or main-steam flow, and reactor recirculation flow can be automatically adjusted.

More specifically, for example, if the fluctuating range of the actual output power of the generator is smaller than the anticipated fluctuating range of the output power of the generator, the ratio of the predicted value of the fluctuating range of the generator's output power to the measured value thereof is regarded as gain, and the fluctuating ranges of the reactor pressure or main-steam flow, and reactor recirculation flow are multiplied by the gain. In this manner, automatic adjustments can be made. That is, as described in the present embodiment, the addition of the output monitoring unit 34 makes it possible to ensure that requirements from the electric power system side are satisfied.

Incidentally, the upper limits of the fluctuating ranges are determined in advance in such a way as to satisfy specifications required from the nuclear reactor side, such as electric power system's required specifications and thermal output limit value, based on results of plant analysis and actual plant tests.

### (OTHER EMBODIMENTS)

While some embodiments of the present invention are described above, they are presented only as exemplar embodiments and not intended to limit the scope of the present invention by any means. The present invention can be embodied in various different ways and the above-described embodiments can be modified, altered and/or combined in various different ways without departing from the scope of the invention. Therefore, those modified embodiments are found within the scope of the present invention. The scope of the following claims is to be accorded the broadest interpretation so as to encompass all such modifications. Incidentally, in each of the above-described embodiments, one frequency fluctuation handling unit 3 is provided. However, in order to improve the reliability of the system, a large number of frequency fluctuation handling units 3 may be provided.

In each of the above-described embodiments, the reactor pressure adjustment unit 32 adjusts, based on the reactor pressure adjustment command signal 312, the reactor pressure adjustment start time, the pressure fluctuating range, and the pressure change rate. However, almost the same advantageous effects as those of the above-described embodiments can be achieved as long as at least the reactor pressure adjustment start time and the pressure fluctuating range are adjusted.

Similarly, in each of the above-described embodiments, the reactor recirculation flow adjustment unit 33 adjusts, based on the reactor recirculation flow adjustment command signal 313, the reactor recirculation flow adjustment start time, the flow fluctuating range, and the flow change rate. However, almost the same advantageous effects as those of the above-described embodiments can be achieved as long as at least the reactor recirculation flow adjustment start time and the flow fluctuating range are adjusted.

## Claims

1. A nuclear reactor power regulator comprising:
a frequency fluctuation detection unit **(31)** that is configured to detect a frequency fluctuation of at least one of an output power change command signal **(101)** output from a central load dispatching center **(1)** and an electric power system frequency signal **(102)** output from an electric power system **(2);**
a control unit **(35)** that is configured to conduct control in such a way as to receive, as an input, a frequency fluctuation detection signal **(311)** of the frequency fluctuation detection unit **(31),** and to output a reactor pressure adjustment command signal **(312),** which is for adjusting a reactor pressure, and a reactor recirculation flow adjustment command signal **(313),** which is for adjusting a reactor recirculation flow;
a reactor pressure adjustment unit **(32)** that is configured to receive, as an input, the reactor pressure adjustment command signal **(312),** and to adjust a reactor pressure adjustment start time and a pressure fluctuating range showing a range in which the pressure is allowed to change to a target pressure value; and
a reactor recirculation flow adjustment unit **(33)** that is configured to receive, as an input, the reactor recirculation flow adjustment command signal **(313),** and to adjust a reactor recirculation flow adjustment start time and a flow fluctuating range showing a range in which the flow is allowed to change to a target flow value, wherein
the control unit **(35)** is configured to output the reactor pressure adjustment command signal **(312)** at a predetermined time after outputting the reactor recirculation flow adjustment command signal **(313),** the predetermined time being predetermined based on request from the electric power system **(2)**.

2. The nuclear reactor power regulator according to claim 1, wherein
the reactor pressure adjustment unit **(32)** is configured to adjust a pressure change rate showing an amount of change per unit time of the reactor pressure, as well as the reactor pressure adjustment start time and the pressure fluctuating range.

3. The nuclear reactor power regulator according to claim 1, wherein
the reactor recirculation flow adjustment unit **(33)** is configured to adjust a flow change rate showing an amount of flow change per unit time, as well as the reactor recirculation flow adjustment start time and the flow fluctuating range.

4. The nuclear reactor power regulator according to any one of claims 1 to 3, further comprising
an output monitoring unit **(34)** that is configured to determine the reactor pressure adjustment start time, pressure fluctuating range, and pressure change rate that are adjusted by the reactor pressure adjustment unit **(32),** and also determines the reactor recirculation flow adjustment start time, flow fluctuating range, and flow change rate that are adjusted by the reactor recirculation flow adjustment unit **(33)** based on at least one of an output power of a power generator and the output power of the reactor at a time when a load change starts.

5. A reactor power adjustment method comprising:
a frequency fluctuation detection step of detecting a frequency fluctuation of at least one of an output power change command signal **(101)** output from a central load dispatching center **(1)** and an electric power system frequency signal **(102)** output from an electric power system **(2);**
a control step of conducting control in such a way as to receive, as an input, a frequency fluctuation detection signal **(311)** obtained by the frequency fluctuation detection step, and output a reactor pressure adjustment command signal, which is for adjusting a reactor pressure, and a reactor recirculation flow adjustment command signal **(313),** which is for adjusting a reactor recirculation flow;
a reactor pressure adjustment step of receiving, as an input, the reactor pressure adjustment command signal **(312),** and adjusting a reactor pressure adjustment start time and a pressure fluctuating range showing a range in which the pressure is allowed to change to a target pressure value; and
a reactor recirculation flow adjustment step of receiving, as an input, the reactor recirculation flow adjustment command signal **(313)**, and adjusting a reactor recirculation flow adjustment start time and a flow fluctuating range showing a range in which the flow is allowed to change to a target flow value, wherein
the control step includes outputting the reactor pressure adjustment command signal **(312)** at a predetermined time after outputting the reactor recirculation flow adjustment command signal **(313),** the predetermined time being predetermined based on request from the electric power system **(2)**.

## Patentansprüche

1. Kernreaktor-Leistungsregler, umfassend:
eine Frequenzschwankungsermittlungseinheit (31), die dafür konfiguriert ist, eine Frequenzschwankung von mindestens einem von Folgendem zu ermitteln, nämlich einem Ausgangsleistungsänderungsbefehlssignal (101), das von einem zentralen Lastverteiler (1) ausgegeben wird, und einem Elektrizitätsnetzfrequenzsignal (102), das von einem Elektrizitätsnetz (2) ausgegeben wird;
eine Steuerungseinheit (35), die dafür konfiguriert ist, Steuerung auf solche Weise durchzuführen, dass sie als Eingabe ein Frequenzschwankungsermittlungssignal (311) der Frequenzschwankungsermittlungseinheit (31) empfängt und ein Reaktordruck-Anpassungsbefehlssignal (312), das zum Anpassen eines Reaktordrucks dient, und ein Reaktorumlaufdurchfluss-Anpassungsbefehlssignal (313), das zum Anpassen eines Reaktorumlaufdurchflusses dient, ausgibt;
eine Reaktordruck-Anpassungseinheit (32), die dafür konfiguriert ist, als Eingabe das Reaktordruck-Anpassungsbefehlssignal (312) zu empfangen und eine Reaktordruck-Anpassungsstartzeit und einen Druckschwankungsbereich anzupassen, der einen Bereich zeigt, in dem der Druck sich zu einem Zieldruckwert ändern darf; und
eine Reaktorumlaufdurchfluss-Anpassungseinheit (33), die dafür konfiguriert ist, als Eingabe das Reaktorumlaufdurchfluss-Anpassungsbefehlssignal (313) zu empfangen und eine Reaktorumlaufdurchfluss-Anpassungsstartzeit und einen Durchflussschwankungsbereich anzupassen, der einen Bereich zeigt, in dem der Durchfluss sich zu einem Zieldurchflusswert ändern darf, worin
die Steuerungseinheit (35) dafür konfiguriert ist, das Reaktordruck-Anpassungsbefehlssignal (312) zu einer vorbestimmten Zeit nach dem Ausgeben des Reaktorumlaufdurchfluss-Anpassungsbefehlssignals (313) auszugeben, wobei die vorbestimmte Zeit aufgrund von Anforderungen vom Elektrizitätsnetz (2) vorbestimmt wird.

2. Kernreaktor-Leistungsregler nach Anspruch 1, worin:
die Reaktordruck-Anpassungseinheit (32) dafür konfiguriert ist, eine Druckänderungsrate, die einen Betrag der Änderung des Reaktordrucks pro Zeiteinheit zeigt, sowie die Reaktordruck-Anpassungsstartzeit und den Druckschwankungsbereich anzupassen.

3. Kernreaktor-Leistungsregler nach Anspruch 1, worin:
die Reaktorumlaufdurchfluss-Anpassungseinheit (33) dafür konfiguriert ist, eine Durchflussänderungsrate, die einen Betrag der Durchflussänderung pro Zeiteinheit zeigt, sowie die Reaktorumlaufdurchfluss-Anpassungsstartzeit und den Durchflussschwankungsbereich anzupassen.

4. Kernreaktor-Leistungsregler nach einem der Ansprüche 1 bis 3, ferner umfassend:
eine Ausgangsüberwachungseinheit (34), die dafür konfiguriert ist, die Reaktordruck-Anpassungsstartzeit, den Druckschwankungsbereich und die Druckänderungsrate zu bestimmen, die durch die Reaktordruck-Anpassungseinheit (32) angepasst werden, und außerdem die Reaktorumlaufdurchfluss-Anpassungsstartzeit, den Durchflussschwankungsbereich und die Durchflussänderungsrate bestimmt, die durch die Reaktorumlaufdurchfluss-Anpassungseinheit (33) angepasst werden, und zwar auf der Grundlage von mindestens einem von Folgendem, nämlich einer Ausgangsleistung eines Leistungsgenerators und der Ausgangsleistung des Reaktors zu einem Zeitpunkt, wenn eine Laständerung beginnt.

5. Reaktorleistungsanpassungsverfahren, umfassend:
einen Frequenzschwankungsermittlungsschritt zum Ermitteln einer Frequenzschwankung von mindestens einem von Folgendem, nämlich einem Ausgangsleistungsänderungsbefehlssignal (101), das von einem zentralen Lastverteiler (1) ausgegeben wird, und einem Elektrizitätsnetzfrequenzsignal (102), das von einem Elektrizitätsnetz (2) ausgegeben wird;
einen Steuerungsschritt zum Durchführen von Steuerung auf solche Weise, dass als Eingabe ein Frequenzschwankungsermittlungssignal (311) empfangen wird, das durch den Frequenzschwankungsermittlungsschritt erlangt wird, und ein Reaktordruck-Anpassungsbefehlssignal, das zum Anpassen eines Reaktordrucks dient, und ein Reaktorumlaufdurchfluss-Anpassungsbefehlssignal (313), das zum Anpassen eines Reaktorumlaufdurchflusses dient, ausgegeben werden;
einen Reaktordruck-Anpassungsschritt zum Empfangen des Reaktordruck-Anpassungsbefehlssignals (312) als Eingabe und zum Anpassen einer Reaktordruck-Anpassungsstartzeit und eines Druckschwankungsbereichs, der einen Bereich zeigt, in dem der Druck sich zu einem Zieldruckwert ändern darf; und
einen Reaktorumlaufdurchfluss-Anpassungsschritt zum Empfangen des Reaktorumlaufdurchfluss-Anpassungsbefehlssignals (313) und zum Anpassen einer Reaktorumlaufdurchfluss-Anpassungsstartzeit und eines Durchflussschwankungsbereichs, der einen Bereich zeigt, in dem der Durchfluss sich zu einem Zieldurchflusswert ändern darf, worin
der Steuerungsschritt einschließt: Ausgeben des Reaktordruck-Anpassungsbefehlssignals (312) zu einer vorbestimmten Zeit nach dem Ausgeben des Reaktorumlaufdurchfluss-Anpassungsbefehlssignals (313), wobei die vorbestimmte Zeit aufgrund von Anforderungen vom Elektrizitätsnetz (2) vorbestimmt wird.

## Revendications

1. Régulateur de puissance de réacteur nucléaire comprenant :
une unité de détection de fluctuation de fréquence (31) qui est configurée de manière à ce qu'elle détecte une fluctuation de fréquence d'au moins un signal pris parmi un signal de commande de modification de puissance de sortie (101) qui est émis en sortie depuis un centre de distribution de charge central (1) et un signal de fréquence de système d'alimentation en énergie électrique (102) qui est émis en sortie depuis un système d'alimentation en énergie électrique (2) ;
une unité de commande (35) qui est configurée de manière à ce qu'elle mette en oeuvre une commande de telle sorte qu'elle reçoive, en tant qu'entrée, un signal de détection de fluctuation de fréquence (311) de l'unité de détection de fluctuation de fréquence (31) et de manière à ce qu'elle émette en sortie un signal de commande de réglage de pression de réacteur (312), dont l'objet consiste à régler une pression de réacteur, et un signal de commande de réglage de flux de recirculation de réacteur (313), dont l'objet consiste à régler un flux de recirculation de réacteur ;
une unité de réglage de pression de réacteur (32) qui est configurée de manière à ce qu'elle reçoive, en tant qu'entrée, le signal de commande de réglage de pression de réacteur (312) et de manière à ce qu'elle règle un temps de début de réglage de pression de réacteur et une plage de fluctuation de pression qui représente une plage dans laquelle la pression est autorisée à varier par rapport à une valeur de pression cible ; et
une unité de réglage de flux de recirculation de réacteur (33) qui est configurée de manière à ce qu'elle reçoive, en tant qu'entrée, le signal de commande de réglage de flux de recirculation de réacteur (313) et de manière à ce qu'elle règle un temps de début de réglage de flux de recirculation de réacteur et une plage de fluctuation de flux qui représente une plage dans laquelle le flux est autorisé à varier par rapport à une valeur de flux cible ; dans lequel :
l'unité de commande (35) est configurée de manière à ce qu'elle émette en sortie le signal de commande de réglage de pression de réacteur (312) à un temps prédéterminé après l'émission en sortie du signal de commande de réglage de flux de recirculation de réacteur (313), le temps prédéterminé étant prédéterminé sur la base d'une requête en provenance du système d'alimentation en énergie électrique (2).

2. Régulateur de puissance de réacteur nucléaire selon la revendication 1, dans lequel
l'unité de réglage de pression de réacteur (32) est configurée de manière à ce qu'elle règle un taux de variation de pression qui représente une quantité de variation par temps unitaire de la pression de réacteur, de même que le temps de début de réglage de pression de réacteur et la plage de fluctuation de pression.

3. Régulateur de puissance de réacteur nucléaire selon la revendication 1, dans lequel
l'unité de réglage de flux de recirculation de réacteur (33) est configurée de manière à ce qu'elle règle un taux de variation de flux qui représente une quantité de variation de flux par temps unitaire, de même que le temps de début de réglage de flux de recirculation de réacteur et la plage de fluctuation de flux.

4. Régulateur de puissance de réacteur nucléaire selon l'une quelconque des revendications 1 à 3, comprenant en outre :
une unité de surveillance de sortie (34) qui est configurée de manière à ce qu'elle détermine le temps de début de réglage de pression de réacteur, la plage de fluctuation de pression et le taux de variation de pression qui sont réglés par l'unité de réglage de pression de réacteur (32) et également de manière à ce qu'elle détermine le temps de début de réglage de flux de recirculation de réacteur, la plage de fluctuation de flux et le taux de variation de flux qui sont réglés par l'unité de réglage de flux de recirculation de réacteur (33) sur la base d'au moins une puissance de sortie prise parmi une puissance de sortie d'un générateur d'énergie électrique et la puissance de sortie du réacteur à un instant auquel une modification de charge commence.

5. Procédé de réglage de puissance de réacteur comprenant :
une étape de détection de fluctuation de fréquence qui consiste à détecter une fluctuation de fréquence d'au moins un signal pris parmi un signal de commande de modification de puissance de sortie (101) qui est émis en sortie depuis un centre de distribution de charge central (1) et un signal de fréquence de système d'alimentation en énergie électrique (102) qui est émis en sortie depuis un système d'alimentation en énergie électrique (2) ;
une étape de commande qui consiste à mettre en oeuvre une commande de manière à recevoir, en tant qu'entrée, un signal de détection de fluctuation de fréquence (311) qui est obtenu au moyen de l'étape de détection de fluctuation de fréquence et à émettre en sortie un signal de commande de réglage de pression de réacteur, dont l'objet consiste à régler une pression de réacteur, et un signal de commande de réglage de flux de recirculation de réacteur (313), dont l'objet consiste à régler un flux de recirculation de réacteur ;
une étape de réglage de pression de réacteur qui consiste à recevoir, en tant qu'entrée, le signal de commande de réglage de pression de réacteur (312) et à régler un temps de début de réglage de pression de réacteur et une plage de fluctuation de pression qui représente une plage dans laquelle la pression est autorisée à varier par rapport à une valeur de pression cible ; et
une étape de réglage de flux de recirculation de réacteur qui consiste à recevoir, en tant qu'entrée, le signal de commande de réglage de flux de recirculation de réacteur (313) et à régler un temps de début de réglage de flux de recirculation de réacteur et une plage de fluctuation de flux qui représente une plage dans laquelle le flux est autorisé à varier par rapport à une valeur de flux cible ; dans lequel :
l'étape de commande inclut l'émission en sortie du signal de commande de réglage de pression de réacteur (312) à un temps prédéterminé après l'émission en sortie du signal de commande de réglage de flux de recirculation de réacteur (313), le temps prédéterminé étant prédéterminé sur la base d'une requête en provenance du système d'alimentation en énergie électrique (2).
